# EUROPÄISCHE PATENTSCHRIFT

(11) **EP 2 269 855 B1**
(45) Veröffentlichungstag und Bekanntmachung des Hinweises auf die Patenterteilung: **23.03.2016**
(21) Anmeldenummer: 10006611.7
(22) Anmeldetag: 25.06.2010
(51) Int. Cl.: B60J 7/12, F16C 33/08, F16C 17/10, F16C 11/04

(54) **Gelenkeinrichtung zwischen Lenkern eines Gestänges eines Faltverdecks**
Joint between rods for a system of rods of a folding roof
Dispositif d'articulation entre des bielles d'une tige de toit escamotable

(30) Priorität: 30.06.2009 DE 102009031050
(43) Veröffentlichungstag der Anmeldung: 05.01.2011
(73) Patentinhaber: Magna Car Top Systems GmbH, 74321 Bietigheim-Bissingen (DE)
(72) Erfinder: Zehnder, Frank, 71282 Hemmingen (DE); Sczuka, Markus, 70437 Stuttgart (DE); Wohlfahrth, Michael, 67165 Waldsee (DE)
(74) Vertreter: Völger, Silke Beatrix

(56) Entgegenhaltungen:
- DE-U1- 29 516 619
- US-A- 2 964 341
- US-A- 3 328 072

## Beschreibung

Die Erfindung bezieht sich auf eine Gelenkeinrichtung zwischen Lenkern eines Gestänges eines Faltverdecks für einen Personenkraftwagen, nach dem Oberbegriff des Patentanspruchs 1.

Es ist eine Gelenkverbindung für ein bewegliches Fahrzeugdach bekannt -DE 199 41 087 C2-. Diese Gelenkverbindung ist mit einem ersten Lagerabschnitt und einem zweiten Lagerabschnitt versehen, die über einen durch einen Niet dargestellten Lagerbolzen zusammengehalten werden. Zur Herabsetzung der Reibung in der Gelenkverbindung sind Gelenkteile von letzterer mit einer reibungsarmen Oberflächenbeschichtung aus Aluminiumoxid versehen.

Die DE 295 16 619 U1 befasst sich mit einem Scharnier für die gelenkige Verbindung zweier Arme -erster Arm und zweiter Arm- eines Faltgestänges zur Aufnahme eines flexiblen Dachs eines Cabrios. Das Scharnier umfasst einen Gelenkzapfen, der in zwei miteinander fluchtenden Bohrungen der beiden Arme eingesetzt ist. Der Gelenkzapfen ist drehfest in der Bohrung des ersten Arms angeordnet und drehbar gegenüber dem zweiten Arm ausgeführt. Dabei ist eine den Gelenkzapfen umgebende Buchse vorgesehen, die aus einem Flüssigkeitskristall-Polymergrundmaterial besteht. Die Buchse ist in eine Bohrung eines metallischen Lagers eingesetzt, das einen Kragen aufweist. Der Kragen wirkt als Distanzscheibe zwischen den Armen.

Aus der US 3,328,072 geht ein Faltverdeck für ein Kraftfahrzeug hervor, welches Faltdach ein Verdeckgestänge aufweist. Das Verdeckgestänge umfasst einen Steuerlenker, einen Querspriegel und einen Hauptlenker, die an einem gemeinsamen Lager zusammengesetzt sind. Der Hauptlenker ist -in Fahrzeugquerrichtung gesehen- mit zwei nebeneinander liegenden, jedoch beabstandeten Lenkerelementen versehen, zwischen die der Steuerlenker mit einem Lagerabschnitt eingebaut ist. Ein Niet verbindet Steuerlenker, Querspriegel und Hauptlenker, wobei in die Bohrung des Steuerlenkers eine Buchse aus nachgiebigem Werkstoff eingesetzt ist, an der zwei Distanzkrägen vorgesehen sind. Sie bewirken einen definierten Abstand zwischen dem Steuerlenker und den Lenkerelementen des Hauptlenkers.

Aus der US 2,964,341 A ist eine Gelenkverbindung bekannt. Diese Gelenkverbindung ist mit einem ersten Lagerabschnitt und einem zweiten Lagerabschnitt versehen, die über einen durch einen Niet dargestellten Lagerbolzen zusammengehalten werden. Zur Herabsetzung der Reibung in der Gelenkverbindung ist zwischen den Gelenkteilen von letzterer eine Lagerbuchse aus einem Polyamid eingesetzt.

Es ist Aufgabe der Erfindung, eine Gelenkeinrichtung zwischen Lenkern eines Gestänges eines Faltverdecks für einen Personenkraftwagen zu entwickeln, welche Gelenkeinrichtung sich durch eine gute Funktion, d.h. Leichtgängigkeit und sichere Verbindung sowie einfache Montage und relativ hohe Kraftaufnahme, auszeichnet.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Gelenkeinrichtung für die Lenker des Gestänges des Faltverdecks dank des Niets und der Lagerbuchse mit den Anschlägen sich musterhaft, d.h. auch klapperfrei, bewegen lässt. Dabei ist aber die hohe Kraftaufnahme und Lebensdauer wie auch einfache konstruktive Umsetzung der Gelenkeinrichtung hervorzuheben. Der Einsatz des Blindniets für die Nietverbindung trägt zur einfachen Montage und definierten Bildung der Aufweitung als Schaftanschlag bei. Die ersten und zweiten Lagerbuchsen in den Lagerbohrungen unterstützen die Leichtgängigkeit der Lenker der Gelenkeinrichtung, und sie stellen darüber hinaus kostengünstige Bauteile dar.

In der Zeichnung werden Ausführungsbeispiele der Erfindung gezeigt, die nachstehend näher erläutert wird.

### Es zeigen

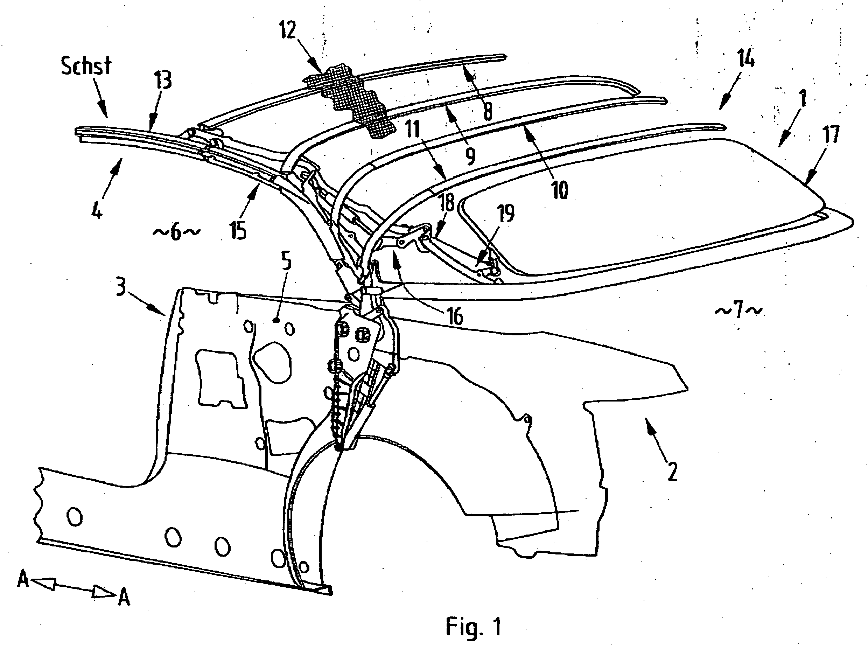

Fig. 1 eine Teilschrägansicht von hinten links auf einen Personenkraftwagen mit Gelenkeinrichtungen eines Gestänges für ein Faltverdeck eines Personenkraftwagens nach der Erfindung,
Fig. 2 eine Schrägansicht einer ersten Gelenkeinrichtung des Gestänges der Fig. 2,

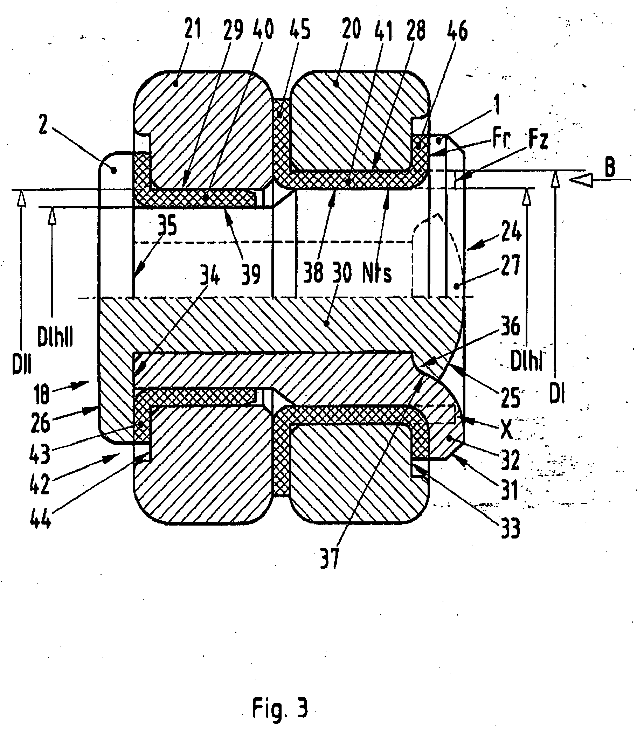

Fig. 3 einen Schnitt etwa nach der Linie III-III der Fig. 2 in größerem Maßstab,
Fig. 4 eine Schrägansicht einer zweiten Gelenkeinrichtung des Gestänges nach Fig. 2,
Fig. 5 einen Schnitt nach der Linie V-V der Fig. 4 eines ersten Fertigungszustands der Gelenkeinrichtung in größerem Maßstab,
Fig. 6 eine Ansicht entsprechend Fig. 5 eines zweiten Fertigungszustands der Gelenkeinrichtung,
Fig. 7 eine Einzelheit X der Fig. 3 bzw. 5.

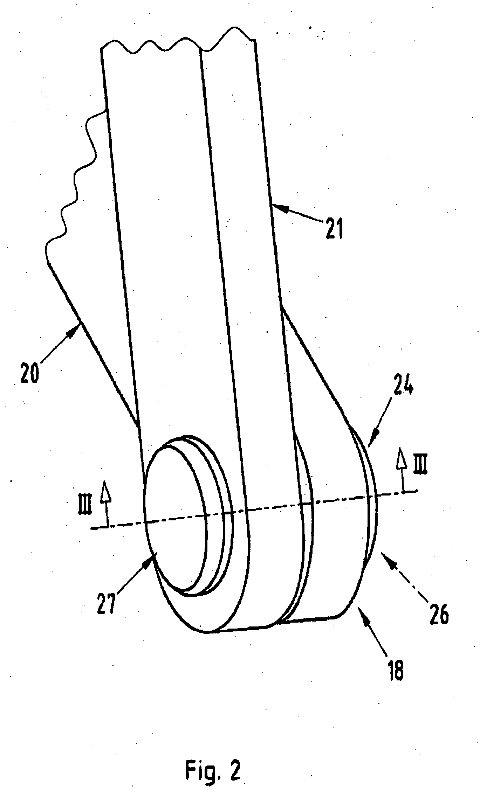

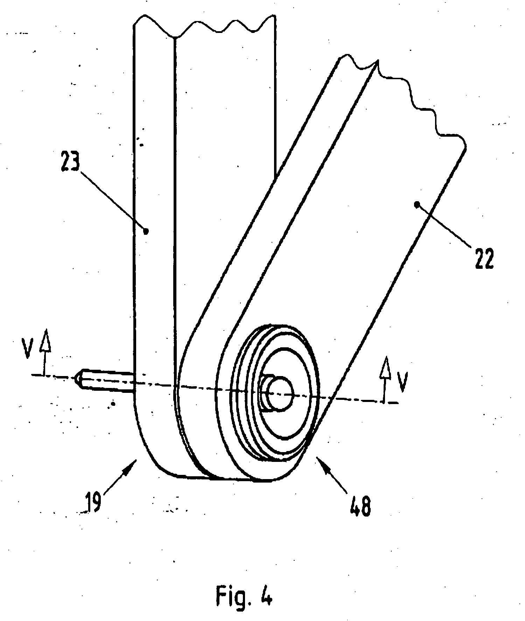

Ein Personenkraftwagen 1 weist einen Aufbau 2 mit einem Grundkörper 3 und einem Faltverdeck 4 auf. Der eine Wandstruktur 5, bspw. aus Metallblech, besitzende Grundkörper 3 trägt das Faltverdeck 4, das zusammenlegbar und von einer einen Fahrgastraum 6 umspannenden Schließstellung Schst in eine in einem Aufbewahrungsraum 7 abgesenkte Offenstellung -nicht gezeigt- bewegbar ist. Das Dach 4 ist mit quer zur Fahrzeuglängsrichtung A-A verlaufenden Spriegeln 8, 9, 10 und 11 versehen, die zumindest in der Schließstellung Schst des Dachs 4 einen Verdeckbezug 12 stützen und mit an Längsseiten 13 und 14 des besagten Dachs 4 verlaufenden Lenkersysternen 15 eines Gestänges 16 zusammenwirken. Der Spriegel 11 begrenzt einen oberen Rand einer Heckscheibe 17. Das Gestänge 16 umfasst ein oder mehrere Gelenkeinrichtungen, z.B. 18 und 19, die relativbewegliche erste und zweite Lenker 20 und 21 -Fig. 2- bzw. erste und zweite Lenker 22 und 23 -Fig. 4- aufweisen.

Die Lenker 20 und 21 der ersten Gelenkeinrichtung 18 werden mittels einer Nieteinrichtung 24 zusammengehalten, die einen Niet 25 mit ersten und zweiten Nietköpfen 26 und 27 und einen erste und zweite Lagerbohrungen 28 und 29 der Lenker 20 und 21 durchdringenden Nietschaft 30 umfasst. Zwischen Nietschaft 30 des Niets 25 und den ersten und zweiten Lagerbohrungen 28 und 29 erstreckt sich eine Lagerhülse 31, die mit einem ersten kragenartigen Anschlag 32 an einer ersten Stirnseite 33 des ersten Lenkers 20 anliegt. Ein zweiter kreisringförmiger Anschlag 34 ist beabstandet zum ersten Anschlag 32 an der Lagerhülse 31 vorgesehen, der sich an einer ersten Innenseite 35 des ersten Nietkopf 26 des Niets 25 abstützt. Der zweite Nietkopf 27 ist mit einer zweiten Innenseite 36 an einen schulterartigen Schaftanschlag 37 der Lagerhülse 31 unmittelbar herangeführt.

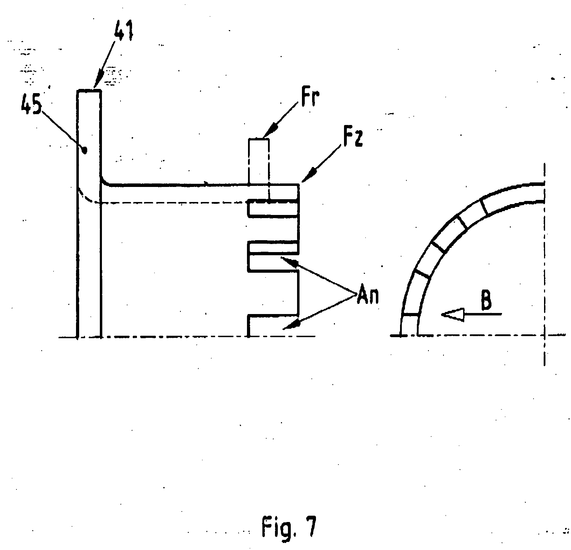

Die Lagerbohrungen 28 und 29 der Lenker 20 und 21 weisen unterschiedliche Durchmesser DI und DII auf, wobei im Ausführungsbeispiel DI größer als DII ist. Entsprechend sind auch Lagerhülsenabschnitte 38 und 39 eines Nietschafts Nts ausgeführt, d.h. Dlhl > Dlhll. Zwischen den ersten und zweiten Lagerbohrungen 28 und 29 bzw. den Lagerhülsenabschnitten 38 und 39 sind erste und zweite Lagerbuchsen 40 und 41 vorgesehen. Die erste Lagerbuchse 40 ist an einem freien Ende 42 mit einem radialen Kragen 43 versehen, der sich zwischen einer zweiten Stirnseite 44 des zweiten Lenkers 21 und der ersten Innenseite 35 des ersten Nietkopfs 26 erstreckt. Die zweite Lagerbuchse 41 weist einen ersten radialen Kragen 45 auf, der zwischen erstem und zweitem Lenker 20 und 21 verläuft. Ein zweiter radialer Kragen 46 der zweiten Lagerbuchse 41 distanziert den ersten kragenartigen Anschlag 32 der Lagerhülse 31 und die erste Stirnseite 33 des ersten Lenkers 20. Der zweite radiale Kragen 46 wird dadurch gebildet, dass er zunächst eine zylinderische Form Fz besitzt und dann durch axiale Bewegung des ersten kragenartigen Anschlags 32 der Lagerhülse 31 in die radiale Form Fr verbracht wird. Hierzu kann die zweite Lagerbuchse 41 in der zylinderischen Form Fz benachbart ihrem freien Ende 47 mit örtlichen Ausnehmungen An -Fig. 7- versehen sein, die den Verformvorgang von Form Fz nach Form Fr erleichtern.

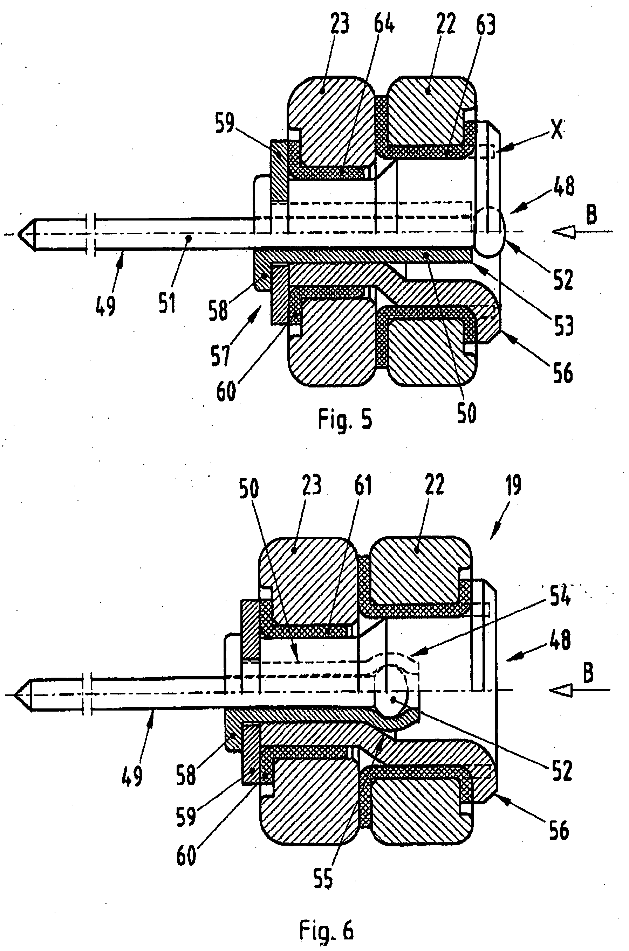

In Fig. 4 sind die ersten und die zweiten Lenker 22 und 23 der zweiten Gelenkeinrichtung 19 dargestellt, die unter Vermittlung einer Nieteinrichtung 48 in Lage gehalten werden. Die Nieteinrichtung 48 besitzt ein Blindniet 49, der einen als Niethülse 50 ausgebildeten Nietschaft Ns und einen Dornschaft 51 mit einem Dornkopf 52 umfasst. Der Dornkopf 52 liegt in einem vorgefertigten Zustand der Gelenkeinrichtung 19 an einem freien Hülsende 53 der Niethülse 50 an -Fig. 5-. Durch eine axiale Bewegung in Richtung B des Dornschafts 51 und des Dornkopfs 52 wird eine radiale Aufweitung 54 -Fig. 6- der Niethülse 44 produziert, die in ihrem Endzustand -Fig. 6-an einem Schaftanschlag 55 einer Lagerhülse 56 anliegt. Die Niethülse 50 weist auf einer freien Seite 57 einen Niethülsenkopf 58 auf, der unter Zwischenschaltung einer Distanzscheibe 59 an einem Kragen 60 einer ersten Lagerbuchse 61 anliegt. Die Lagerhülse 56 ist prinzipiell ähnlich aufgebaut wie die Lagerhülse 31. Sinngemäß trifft dies auch für die erste Lagerbuchse 61 und eine zweite Lagerbuchse 62 zu, die konstruktionsverwandt mit den Lagerbuchsen 40 und 41 sind und zwischen ersten und zweiten Lagerbohrungen 63 und 64 der Lenker 22 und 23 sowie Lagerhülsenabschnitten 65 und 66 der Lagerhülse 56 verlaufen.

Schließlich bestehen die Lagerbuchsen 37 und 38 bzw. 61 und 62 aus Kunststoff, Metall oder dgl. bzw. einem anderen geeigneten Werkstoff mit entsprechenden Lagercharakteristika.

## Patentansprüche

1. Gelenkeinrichtung (18; 19) zwischen Lenkern (20, 21; 22, 23) eines Gestänges (16) eines Faltverdecks (4) für einen Personenkraftwagen (1), das von einer einen Fahrgastraum überspannenden Schließstellung (Schst) in eine in einem Heckraum abgelegte Offenstellung verstellbar ist und vice versa, wobei die Lenker (20, 21; 22, 23) mittels einer Nieteinrichtung (24; 48) in Lage gehalten werden, die einen Niet (25; 49) mit Nietköpfen (26, 27) und einen Lagerbohrungen (28, 29) der Lenker (20, 21; 22, 23) durchdringenden Nietschaft (30; Ns) umfasst, **dadurch gekennzeichnet, dass** zwischen Nietschaft (30; Ns) des Niets (25; Blindniet 49) und ersten und zweiten Lagerbohrungen (28 und 29) der ersten und zweiten Lenker (20, 21 bzw. 22 und 23) sich eine Lagerhülse (31 bzw. 56) mit ersten und zweiten Lagerhülsenabschnitten (38 und 39) erstreckt, wobei die Lagerhülse (31) mit einem ersten kragenartigen Anschlag (32) an einem ersten Lenker (20) anliegt und sich mit einem zum ersten Anschlag (32) beabstandeten zweiten Anschlag (34) an einem ersten Nietkopf (26) des Niets (25, Blindniet 49) ab- stützt und dass ein zweiter Nietkopf (27) an einen Schaftanschlag (37) der Lagerhülse (31 und 56) herangeführt ist, und wobei zwischen den ersten und den zweiten Lagerbohrungen (28 und 29; 63 und 64) und ersten und zweiten Lagerhülsenabschnitten (38 und 39) erste und zweite Lagerbuchsen (40 und 41; 61 und 62) vorgesehen sind, und wobei die zweite Lagerbuchse (41; 62) einen ersten und einen zweiten radialen Kragen (45 und 46) zwischen den ersten und zweiten Lenkern (20 und 21; 22 und 23) aufweist, wobei der zweite radiale Kragen (46) der zweiten Lagerbuchse (41; 62) zwischen erstem kragenartigen Anschlag (32) und dem zweiten Lenker (21; 23) angeordnet ist, und wobei der zweite radiale Kragen (46) der zweiten Lagerbuchse (41; 62) von einer zylindrischen Form (Fz) in eine radiale Form (Fr) durch eine axiale Bewegung (Richtung B) der Lagerhülse (31; 56) geformt wird, und wobei zur Unterstützung der Formgebung des zweiten radialen Kragens (46) der zweiten Lagerbuchse (41; 62) im Bereich des besagten zweiten Kragens (46) Ausnehmungen (An) vorgesehen sind.

2. Gelenkeinrichtung nach Anspruch 1, **dadurch gekennzeichnet, dass** der zweite Nietkopf (27) durch eine radiale Aufweitung (54) dargestellt ist, die sich am Schaftanschlag (55) der Lagerhülse (56) abstützt.

3. Gelenkeinrichtung nach den Ansprüchen 1 und 2, **dadurch gekennzeichnet, dass** die Lagerhülse, der erste Anschlag (32), der zweite Anschlag (34) und der Schaftanschlag (37; 55) in der Weise ausgebildet sind, dass der erste Lenker (20 und 22) und der zweite Lenker (21 und 23) gezielt relativbeweglich zueinander verstellbar sind.

4. Gelenkeinrichtung nach einem oder mehreren der vorangehenden Ansprüche, **dadurch gekennzeichnet, dass** ein Niet einer Nieteinrichtung (48) ein Blindniet (49) ist, der eine Niethülse (50) und einen letztere durchdringenden Domschaft (51) mit einem Dornkopf (52) umfasst, welcher Dornkopf (52) in einem vorgefertigten Zustand der Gelenkeinrichtung (19) an einem Hülsenende (53) der Niethülse (50) anliegt.

5. Gelenkeinrichtung nach den Ansprüchen 2 und 4, **dadurch gekennzeichnet, dass** durch eine axiale Bewegung (Richtung B) des Dornschafts (51) und des Domkopfs (52) die radiale Aufweitung (54) der Niethülse (50) hergestellt wird.

6. Gelenkeinrichtung nach einem oder mehreren der vorangehenden Ansprüche, **dadurch gekennzeichnet, dass** die erste Lagerbuchse (40, 61) einen radialen Kragen (43) besitzt, der zwischen erstem Lenker (22) und erstem Nietkopf (26) des Niets (25; Blindniet 49) vorgesehen ist.

7. Gelenkeinrichtung nach Anspruch 6, **dadurch gekennzeichnet, dass** zwischen radialem Kragen (60) und dem ersten Nietkopf eine Distanzscheibe (59) vorgesehen ist.

8. Gelenkeinrichtung nach einem oder mehreren der vorangehenden Ansprüche, **dadurch gekennzeichnet, dass** die Lagerbuchsen (40 und 41; 61 und 62) aus Kunststoff, Metall oder dgl. hergestellt sind.

## Claims

1. Joint (18; 19) between rods (20, 21; 22, 23) of a system of rods (16) of a folding roof (4) for a passenger vehicle (1), which folding roof can be adjusted from a closed position (Schst) which spans a passenger compartment into an open position put down in a rear space, and vice versa, the rods (20, 21; 22, 23) being held in position by means of a rivet device (24; 48) which comprises a rivet (25; 49) with rivet heads (26, 27) and a rivet shaft (30; N_{S}) which extends through bearing holes (28, 29) of the rods (20, 21; 22, 23), **characterized in that** a bearing sleeve (31 or 56) with first and second bearing sleeve sections (38 and 39) extends between rivet shaft (30; N_{S}) of the rivet (25; blind rivet 49) and first and second bearing holes (28 and 29) of the first and second rods (20, 21 or 22 and 23), wherein the bearing sleeve (31) bears with a first collar-like stop (32) against a first rod (20) and is supported with a second stop (34), which is spaced apart from the first stop (32), on a first rivet head (26) of the rivet (25, blind rivet 49), and **in that** a second rivet head (27) is moved towards a shaft stop (37) of the bearing sleeve (31 and 56), and wherein first and second bearing bushes (40 and 41; 61 and 62) are provided between the first and the second bearing holes (28 and 29; 63 and 64) and first and second bearing sleeve sections (38 and 39), and wherein the second bearing bush (41; 62) has a first and a second radial collar (45 and 46) between the first and second rods (20 and 21; 22 and 23), wherein the second radial collar (46) of the second bearing bush (41; 62) is arranged between first collar-like stop (32) and the second rod (21; 23), and wherein the second radial collar (46) of the second bearing bush (41; 62) is shaped from a cylindrical shape (Fz) into a radial shape (Fr) by an axial movement (direction B) of the bearing sleeve (31; 56), and wherein, in order to support the shaping of the second radial collar (46) of the second bearing bush (41; 62), recesses (An) are provided in the region of said second collar (46).

2. Joint according to Claim 1, **characterized in that** the second rivet head (27) is represented by a radial expansion (54) which is supported on the shaft stop (55) of the bearing sleeve (56).

3. Joint according to Claims 1 and 2, **characterized in that** the bearing sleeve, the first stop (32), the second stop (34) and the shaft stop (37; 55) are constructed in such a manner that the first rod (20 and 22) and the second rod (21 and 23) can be adjusted relative to each other in a selective manner with relative movement.

4. Joint according to one or more of the preceding claims, **characterized in that** a rivet of a rivet device (48) is a blind rivet (49) which comprises a rivet sleeve (50) and a gudgeon shaft (51) which extends through the latter which has a gudgeon head (52), which gudgeon head (52) bears against a sleeve end (53) of the rivet sleeve (50) in a premanufactured state of the joint (19).

5. Joint according to Claims 2 and 4, **characterized in that** the radial expansion (54) of the rivet sleeve (50) is produced by an axial movement (direction B) of the gudgeon shaft (51) and of the gudgeon head (52).

6. Joint according to one or more of the preceding claims, **characterized in that** the first bearing bush (40, 61) has a radial collar (43) which is provided between the first rod (22) and the first rivet head (26) of the rivet (25; blind rivet 49).

7. Joint according to Claim 6, **characterized in that** a spacer disk (59) is provided between the radial collar (60) and the first rivet head.

8. Joint according to one or more of the preceding claims, **characterized in that** the bearing bushes (40 and 41; 61 and 62) are produced from plastics material, metal or the like.

## Revendications

1. Dispositif d'articulation (18 ; 19) entre les bielles (20, 21 ; 22, 23) d'une tige (16) de toit escamotable (4) pour un véhicule de tourisme (1), pouvant être déplacé d'une position de fermeture (Schit) recouvrant un habitacle dans une position ouverte rangée dans un espace arrière et vice versa, les bielles (20, 21 ; 22, 23) étant maintenues en place au moyen d'un dispositif de rivet (24 ; 48) comprenant un rivet (25 ; 49) avec des têtes de rivet (26, 27) et une tige de rivet (30 ; Ns) traversant les alésages de palier (28, 29) des bielles (20, 21 ; 22, 23), **caractérisé en ce qu'**une douille de palier (31 et/ou 56) dotée de première et deuxième sections de douille de palier (38 et 39) s'étend entre la tige de rivet (30 ; Ns) du rivet (25 ; rivet aveugle 49) et les premier et deuxième alésages de palier (28 et 29) des première et deuxième bielles (20, 21 et/ou 22 et 23), la douille de palier (31) reposant avec une première butée (32) de type collet contre une première bielle (20) et appuyant avec une deuxième butée (34) séparée de la première butée (32) contre une première tête de rivet (26) du rivet (25, rivet aveugle 49) et qu'une deuxième tête de rivet (27) est guidée contre une butée de tige (37) de la douille de palier (31 et 56) et des première et deuxième douilles de palier (40 et 41 ; 61 et 62) étant prévues entre les premier et deuxième alésages de palier (28 et 29 ; 63 et 64) et les première et deuxième sections de douille de palier (38 et 39) et la deuxième douille de palier (41 ; 62) comportant des premier et deuxième collets (45 et 46) radiaux entre les première et deuxième bielles (20 et 21 ; 22 et 23), le deuxième collet (46) radial de la deuxième douille de palier (41 ; 62) étant disposé entre la première butée (32) de type collet et la deuxième bielle (21 ; 23) et le deuxième collet (46) radial de la deuxième douille de palier (41 ; 62) prenant une forme cylindrique (Fz) dans une forme radiale (Fr) par le biais d'un mouvement axial (direction B) de la douille de palier (31 ; 56) et des évidements (An) étant prévus pour soutenir la formation du deuxième collet (46) radial de la deuxième douille de palier (41 ; 62) dans la région dudit deuxième collet (46).

2. Dispositif d'articulation selon la revendication 1, **caractérisé en ce que** la deuxième tête de rivet (27) est représentée par un élargissement radial (54) reposant contre la butée de tige (55) de la douille de palier (56).

3. Dispositif d'articulation selon les revendications 1 et 2, **caractérisé en ce que** la douille de palier, la première butée (32), la deuxième butée (34) et la butée de tige (37 ; 55) sont réalisées de façon à ce que la première bielle (20 et 22) et la deuxième bielle (21 et 23) puissent être déplacées de façon ciblée et mobile l'une par rapport à l'autre.

4. Dispositif d'articulation selon l'une quelconque des revendications précédentes ou plusieurs d'entre elles, **caractérisé en ce qu'**un rivet d'un dispositif de rivet (48) est un rivet aveugle (49) comportant une douille de rivet (50) et une dernière tige de mandrin (51) traversante avec une tête de mandrin (52), ladite tête de mandrin (52) reposant, dans un état préfabriqué du dispositif d'articulation (19), contre une extrémité de douille (53) de la douille de rivet (50).

5. Dispositif d'articulation selon les revendications 2 et 4, **caractérisé en ce qu'**un mouvement axial (direction B) de la tige de mandrin (51) et de la tête de mandrin (52) permet de fabriquer l'élargissement radial (54) de la douille de rivet (50).

6. Dispositif d'articulation selon l'une quelconque des revendications précédentes ou plusieurs d'entre elles, **caractérisé en ce que** la première douille de palier (40, 61) possède un collet radial (43) prévu entre la première bielle (22) et la première tête de rivet (26) du rivet (25 ; rivet aveugle 49).

7. Dispositif d'articulation selon la revendication 6, **caractérisé en ce qu'**un disque d'écartement (59) est prévu entre le collet (60) radial et la première tête de rivet.

8. Dispositif d'articulation selon l'une quelconque des revendications précédentes ou plusieurs d'entre elles, **caractérisé en ce que** les douilles de palier (40 et 41 ; 61 et 62) sont fabriquées en matière plastique, en métal ou leur équivalent.
